# EUROPEAN PATENT SPECIFICATION

(11) **EP 0 396 052 B1**
(45) Date of publication and mention of the grant of the patent: **19.07.1995**
(21) Application number: 90108128.1
(22) Date of filing: 27.04.1990
(51) Int. Cl.: G06K 7/10, G06K 15/00, G06K 17/00, B41J 11/46

(54) **Line thermal printer for bar-coded paper**
Thermo-Zeilendrucker für Papier mit Strichkode
Imprimante thermique de ligne par ligne pour papier avec un code à barres

(30) Priority: 01.05.1989 JP 112497/89
(43) Date of publication of application: 07.11.1990
(73) Proprietor: STAR MICRONICS CO., LTD., Shizuoka-shi Shizuoka (JP)
(72) Inventor: Nishizawa, Yoshikazu, c/o Star Micronics Co. Ltd., Shizuoka (JP); Suzuki, Kenji, c/o Star Micronics Co. Ltd., Shizuoka (JP)
(74) Representative: Heim, Hans-Karl, Dipl.-Ing.

(56) References cited:
- GB-A- 2 197 824
- US-A- 4 516 137
- PATENT ABSTRACTS OF JAPAN vol. 12, no. 466 (M-772)(3313) 9 August 1988 & JP-A- 63 191 661
- IBM-TDB vol. 20, no. 4, September 1977, ARMONK page 1299; A. J. DATTILO & C. A. QUEENER: 'Scanning typewriter'

## Description

### BACKGROUND OF THE INVENTION

### 1. Field of the Invention:

This invention relates to a line thermal printer for a bar-coded paper, and more particularly to such line thermal printer in which printing conditions can be automatically set in conformity with the size of a printing medium which size is optionally selected from a plurality of sizes.

### 2. Description of the Related Art:

For papers as printing media, there are various sizes and forms, such as sheets of paper cut into regular sizes of A4, B5, B4, etc. and continuous sheets of paper having separating lines of perforations.

Heretofore, in printing with these printing papers, it is required to adjust the printing position and range of the printer in conformity with the size and form of the individual printing paper. In order not to perform printing outside the printing paper or over the separating lines of perforations, the width and length of printing are inputted to the printer by a suitable means to thereby set an appropriate printing area before printing.

In a thermal transfer printer using a dot-type thermal head, the head is heated directly by a built-in heater during printing. Some of such thermal transfer printers use a thermal paper (thermosensitive paper) coloring by heat, and in some of the thermal transfer printers, ink of a ribbon is melted by the heat of the head and is transferred to the print paper, and others use a thermal transfer paper composed of an inked paper and a substrate as a printing medium. It is required to set appropriate printing conditions such as by changing the driving condition of the head to meet the quality of a printing paper, such as by varying the conducting width in accordance with the thermosensitive characteristic, which depends on the color of ink, when printing by a thermal head, and by varying the conducting width to meet the quality of a thermal transfer paper when the thermal transfer paper uses a substrate. Practically, however, performing these procedures manually is laborious and time-consuming.

To this end, for automating the setting of these printing conditions, an attempt has hitherto been made to attach to a printing medium a label bearing a bar code or to print a bar code directly on a printing medium; the bar code presents information about the printing conditions. In use, with the bar-coded paper loaded on a printer, a sensor carrier unit, which has a built-in light-reflecting sensor composed of a light emitting element and a light receiving element, is located in confronting relation with the bar code to read the printing conditions as the sensor carrier unit is moved along the bar code. With this conventional arrangement, since printing is performed in accordance with the printing conditions that are automatically inputted to meet the individual printing paper, accurate printing can be achieved efficiently without the burden of manual setting of the printing conditions. This prior art is exemplified by Japanese Patent Laid-Open Publication No. JP-A-62 271 189.

Specifically, as the sensor carrier unit is moved along the bar coded portion of the printing paper, light emitted from the light emitting element of the sensor built in the sensor carrier unit strikes on the bar code and is then reflected to direct to the light receiving element which converts the received light to an electrical signal. At that time, the light source of the light emitting element may be a laser, which generates a very narrow, intense beam of coherent light, to achieve reliable reading irrespective of the distance between the light source and the bar code; but a problem is that a laser is relatively expensitive.

For low cost and compact size, a light-reflecting sensor composed of an light-emitting diode and a photo-transistor is recently coming to be widely used. However, since light of the light-emitting diode can easily diffuse, the photo-transistor cannot accurately receive the diode's light reflected on the bar code, if the sensor comes out of a predetermined allowable positional range matching a required sensor characteristic as the sensor is located too remotely from the bar code or as the bar code floats in part off the paper. This causes only inaccurate reading.

So attempts have been made to keep the distance between the sensor and the bar code by improving the precision of individual components of the reader mechanism, but they have been found unsatisfactory due the staggering quality and assembly of the individual components and also due to the increase of cost of the parts and hence of production.

Another problem with the prior printer is that in the absence of any means for holding the paper in position during reading, the paper can easily be deflected from the correct position relative to the sensor in response to even a slight vibration or impact.

### SUMMARY OF THE INVENTION

It is therefore an object of this invention to provide a line thermal printer, for making a print on a bar-coded paper, in which printer reading of the bar ccde can be performed accurately, even with the staggering distance between the bar code and a light-reflecting sensor due to puckering of the bar coded portion, and free of printing trouble even in the absence of a certain vibration or impact exerted in the printer body.

According to this invention, there is provided a line thermal printer as specified in claim 1.

With this arrangement, since at least one of the thermal head and the platen is pivotally movable between a printing position in which the thermal head and the platen are located close to each other to hold therebetween the printing medium and a non-printing position in which the thermal head and the platen are located remotely from each other to release the printing medium, the printing medium can be loaded on the platen at the non-printing position and can be held in position at the printing position, i.e., during reading the bar code. Therefore the printing medium is hardly displaced, even when received a vibration or impact, during reading the bar code.

Further, partly since at least one of the sensor carrier unit and the guide member is movable, in response to the movement of the line thermal printer mechanism, between a reading position in which it is in contact with the printing medium and a non-reading position in which it is retracted from the printing medium, and partly since the sensor carrier unit is movable along the bar code, the bar code can be read accurately and easily as the distance between the sensor and the bar code is corrected if it varies due to puckering of the bar-coded portion.

The above and other advantages, features and additional objects of this invention will be manifest to those versed in the art upon making reference to the following detailed description and the accompanying drawings in which a preferred structural embodiment incorporating the principles of this invention is shown by way of illustrative example.

### BRIEF DESCRIPTION OF THE DRAWINGS

FIG. 1 is a cross-sectional view of a line thermal printer embodying this invention, showing the printer in a non-printing position where a line thermal head is released;
FIG. 2 is a view similar to FIG. 1, showing the printer in a printing position where the line thermal head is disposed against a platen;
FIG. 3 is a front elevational view of the printer;
FIG. 4 is a plan view of the printer;
FIG. 5 is a cross-sectional view taken along line V-V of FIG. 7, showing a sensor carrier unit located in the H. P.;
FIG. 6 is a cross-sectional view taken along line VI-VI of FIG. 7, showing the sensor carrier unit located in a bar ccde reading position;
FIG. 7 is a rear cross-sectional view of the sensor carrier unit;
FIG. 8 is a flowchart showing the manner in which a bar code is read; and
FIG. 9 is a perspective view of a ground-boarded thermal transfer paper.

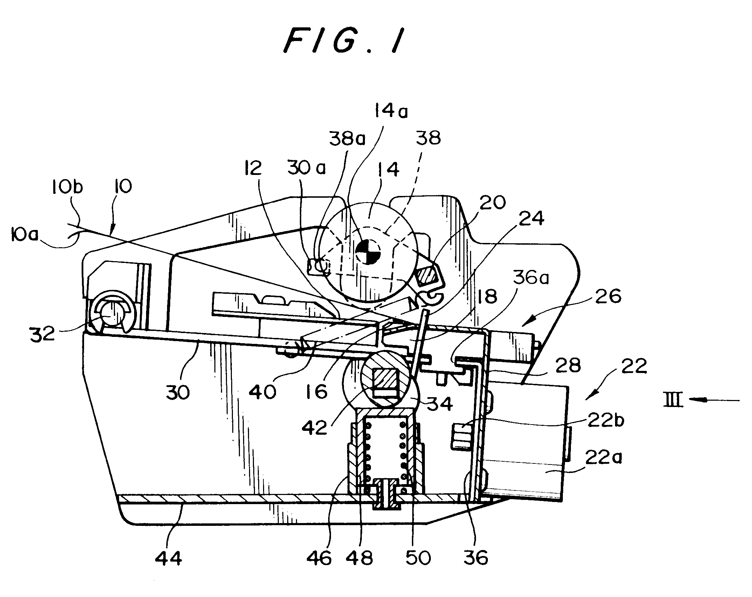

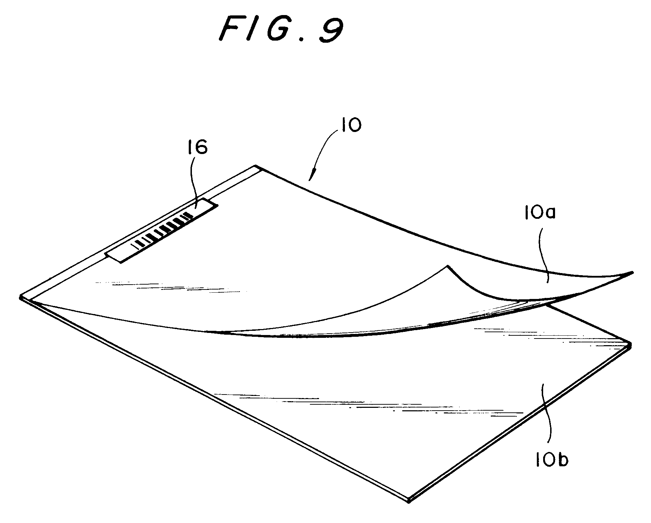

The principles of this invention are particularly useful when embodied in a line thermal printer, for a bar-coded paper, such as shown in FIGS. 1 through 4. In the illustrated embodiment, a printing medium is a bar-coded thermal transfer paper as described below in connection with FIG. 9.

### (Line Thermal Printer Mechanism)

In the line thermal printer, an array of heaters is built in a dot-type printer head for performing printing line by line. Since printing is conducted with the head in contact with a printing medium, the printing medium can be kept stationary in a printing position.

As shown in FIG. 9, the printing medium is a thermal transfer paper 10 which is composed of an inked sheet 10a, and a ground board 10b onto which the ink is transferred from the inked sheet 10a to form a print. The ground board 10b is separably attached at its upper marginal portion to the inked sheet 10a. A label bearing a bar code 16 is attached to an upper marginal portion of the inked sheet 10a; alternatively the bar code 16 may be printed directly on the inked sheet 10a. The bar code 16 represents a set of printing conditions.

As shown in FIG. 1, a line thermal head 12 is fixed to a head holder 30 pivotally supported on a pivot 32. Before setting or loading the printing medium 10, a release cam 34 is lowered, and the line thermal head 12 is located in a non-printing position remote from the platen 14.

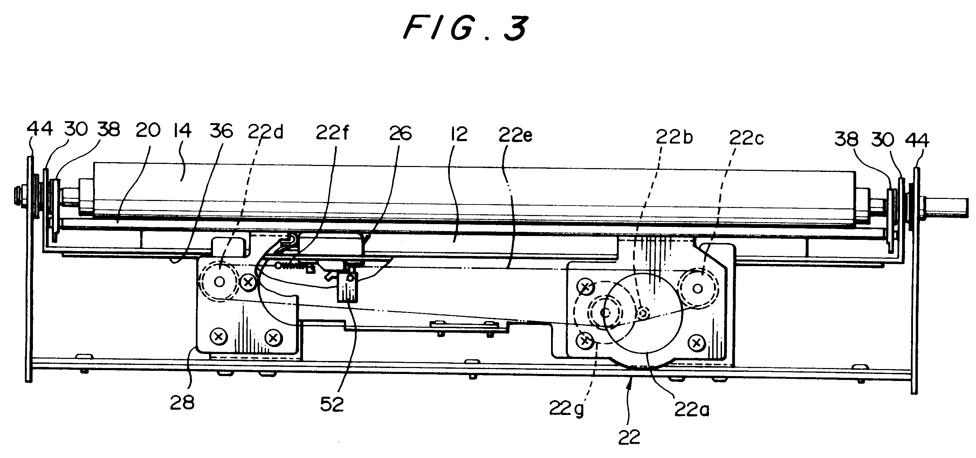

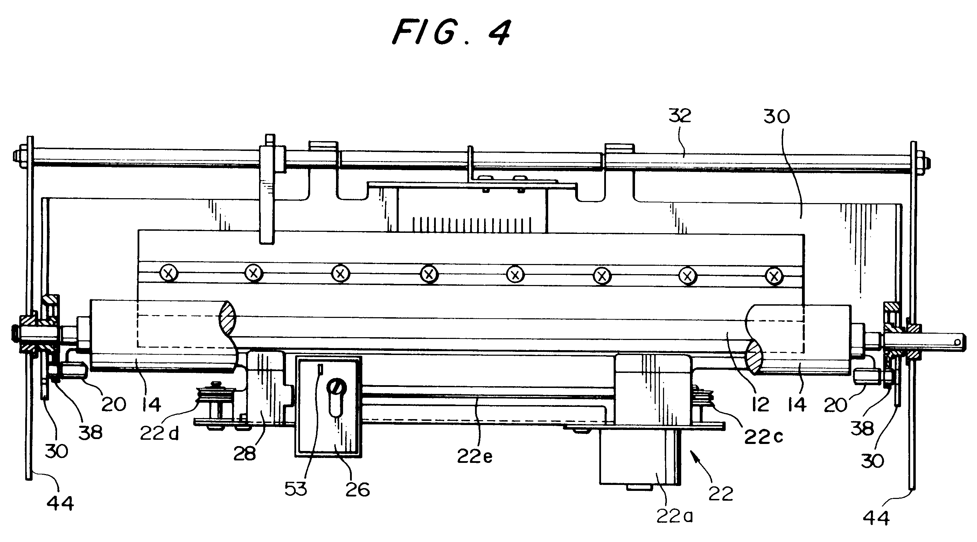

For reading the bar code, a light-reflecting sensor 18 is built in a sensor carrier unit 26 which is pivotally supported on a distal end of the head holder 30. The sensor 18 is composed of a light-emitting diode and a photo-transistor. The sensor carrier unit 26 is movable along a slit 36a of a sensor frame 36 in the direction of reading the bar code 16, i.e., rightwardly in FIGS. 3 and 4 as driven by a bar-code motor 22a.

A guide member 20 is in the form of a rod located so as to support the printing medium 10 on its rear surface at a position corresponding to the bar code 16. The guide member 20 should by no means be limited to this specific example and may be any other form for supporting the bar-coded portion from the rear side of the printing medium 10. The guide member 20 is fixed to a bail lever 38 which is pivotable about a shaft 14a of a platen 14, and is located aside upwardly while the head holder 30 is in the non-printing position. Namely, since a bail pin 38a on a distal end of one arm of the bail lever 38 is freely movably engaged in a rectangular hole 30a of the head holder 30, the bail lever 38 is pivotally moved counterclockwise to move the guide member 20 upwardly against the bias of a tension spring 40 when the head holder 30 is lowered.

In this state, the thermal transfer paper is set or loaded by a manual or automatic paper supply unit from the leftside in FIG. 1 in such a manner that the printing surface (i.e., the bar-coded surface) of the paper is disposed at the side of the line thermal head 12. At that time, the printing medium 10 is inserted over a paper guide 28 until its leading end portion reaches a paper stop 24.

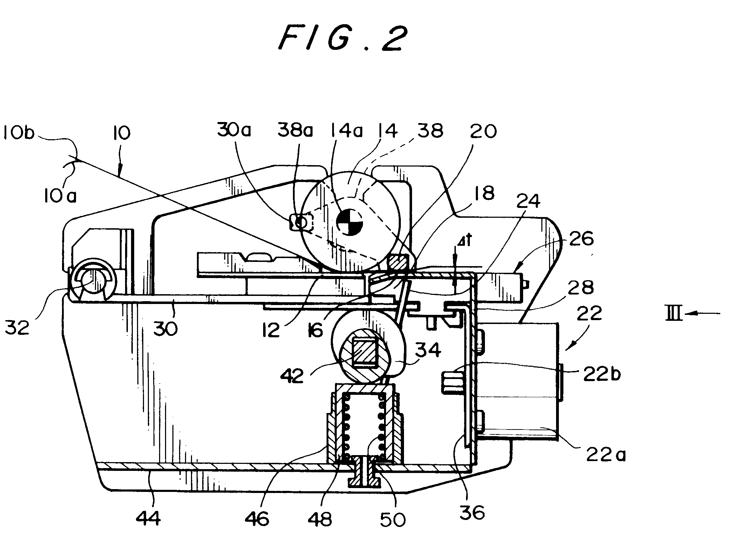

As a cam shaft 42 is turned through an angle of 180° by a non-illustrated release motor, a release cam 34 presses the line thermal head 12 against the platen 14 via the paper 10. This is the printing position shown in FIG. 2.

A spring holder guide 46 is fixed to a base frame 44. Inside the spring holder guide 46, a spring holder 48 is vertically movably disposed in contact with the inner wall of the spring holder guide 46, and a head pressure spring 50 is received in the spring holder 48 and normally urges the spring holder 48 to a predetermined position. Thus the spring holder 48 is resiliently held in this position. By this resilient mechanism located on the opposite side of the head holder 30 with the cam 34 disposed therebetween, it is possible to release a lateral pressure acting on the cam shaft 42 when the line thermal head 12 is pressed against the platen 14.

In the illustrated embodiment, the cam shaft 42 has a square cross section, and the release cam 34 has a slightly vertically elongated rectangular hole so that the cam shaft 42 can be vertically moved in the rectangular hole to a slight extent. As a result, most of the biasing force of the head pressure spring 50 can be transmitted to the line thermal head 12 via release cam 34, without acting on the cam shaft 42, so that the lateral pressure acting on the cam shaft 42 can be released to eliminate any deformation and damage.

With the rising of the head holder 30 as a unit with the line thermal head 12, the rectangular hole 30a brings the bail pin 38a upwardly to cause the bail lever 38 to pivotally move clockwise so that the guide member 20 is lowered to a predetermined position shown in FIG. 2. While the line thermal head 12 is located remotely from the platen, the guide member 20 also is remote from the line thermal head 12. Therefore the head can be cleaned with ease. Alternatively the guide member 20 could be fixed in the position of FIG. 2 from the beginning.

Since the printing medium 10 is held in the printing position in which it is sandwiched between the platen 14 and the line thermal head 12, the printing medium 10 would not be displaced even as received a slight vibration or impact, preventing any reading error.

From the position of FIG. 2, reading of the bar code is conducted as described below, and the line thermal head 12 performs printing on the printing medium 10 line by line by thermal transfer in accordance with the printing conditions as read.

### (Bar Code reader mechanism)

By the above-mentioned series of operation procedures, as shown in FIG. 2, the bar-coded portion (16) of the printing medium 10 is located within a gap Δt between the guide member 20 and the paper guide 28. This Δt is preferably a gap corresponding to the thickness of about one or two printing mediums so that a printing medium can be held almost exactly. Consequently even if the bar-coded surface is puckering or if the parts precision of the bar code reader mechanism is not so high, it is possible to keep the distance between the built-in sensor 18 of the sensor carrier unit 26 constant with ease.

For moving the sensor carrier unit 26 to a predetermined home position (hereinafter called "H. P.") of FIG. 3, in which an H. P. switch 52 is located, when conducting to a power source, the bar code motor 22a is rotated to move a carrier rope 22b via a pinion 22b and a pulley gear 22g. The carrier rope 22e has a carrier spring 22f giving a tension to the carrier rope 22e so that the rotational force of the pulley gear 22g is transmitted to the carrier rope 22e without fail. The carrier rope 22e is wound at opposite ends about a pair of pulleys 22c, 22d. The H. P. switch 52 causes the sensor 18 to take an ON state when the sensor carrier unit 26 reaches the H. P., and to take an OFF state when the sensor carrier unit 26 is located at any other position.

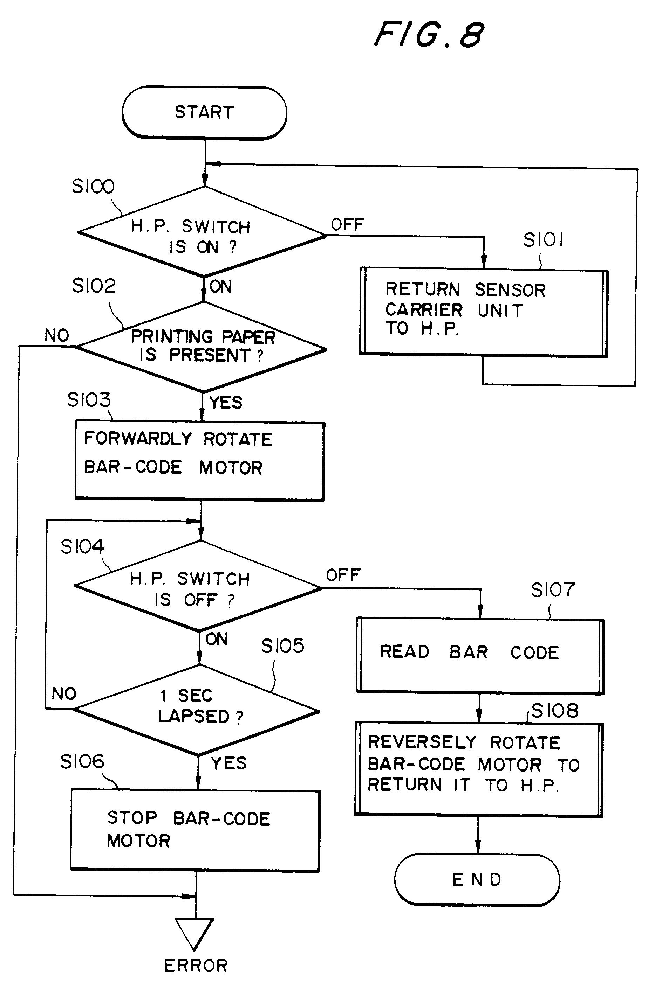

The operation of the bar code reader mechanism will now be described in connection with FIGS. 3, 4 and 8.

Starting the procedures from the state shown in FIG. 2, at step 100, checking is performed whether the H. P. switch 52 assumes the ON state or not, namely, whether the sensor carrier unit 26 is located in the H. P.

If the H. P. switch 52 assumes the OFF state, the routine goes to step 101 where the bar code motor 22a is rotated to return the sensor carrier unit 26 to the H. P. of FIG. 3 temporarily, making a check again at step 100.

If the H. P. switch 52 assumes the ON state, the routine goes to step 102 to check whether the printing paper is present or absent. This checking is performed by a non-illustrated paper detection sensor located near the paper stop of FIG. 2. In the absence of a printing paper, an error is displayed.

In the presence of a printing paper, the routine goes to step 103 where the bar code motor 22e is rotated forwardly so as to move the sensor Carrier unit 26 in the direction of reading the bar code (rightwardly in FIG. 3).

At step 104, as the sensor carrier unit 26 is moved rightwardly, the H. P. switch 52 assumes the OFF state. If the H. P. switch 52 still remains the ON state, the bar code motor 22a is stopped to display an error at step 106 unless the H. P. switch 52 comes to take the OFF state before lapsing one second at step 105.

When the H. P. switch 52 has come to take the OFF state at step 104, the sensor carrier unit 26 is moved off the H. P. and runs in the direction of reading the bar code. The light-emitting diode of the sensor carrier unit 26 of FIG. 4, which is a plan view of FIG. 3, emits light to strike the bar code, and then the light is reflected on the bar code to enter a read slit 53, whereupon the light is received by the photo-transistor to thereby read the bar (step 107). At that time, the light-reflecting sensor 18 has to be moved at constant speed to read a variety of widths of bars of the bar code; for this purpose, the illustrated embodiment employs a non-illustrated governor circuit which controls the bar code motor 22a to a constant speed of rotation.

Upon completion of reading, the routine goes to step 108 where the bar code motor 22a is reversely rotated so that the sensor carrier unit 26 is returned to the H. P. to thus terminate reading of the bar code.

With the bar code reader mechanism of the illustrated embodiment, partly since the printing medium 10 is held from its rear side by the guide member 20 during reading, and partly since the light-reflecting sensor is disposed close to or against the printing medium 10 during reading, it is possible to read the bar code precisely, despite using the light-reflecting sensor which is composed of a light-emitting diode and a photo-transistor. Accordingly the line thermal printer of this invention is inexpensive and small-sized.

### (Sensor Carrier Unit)

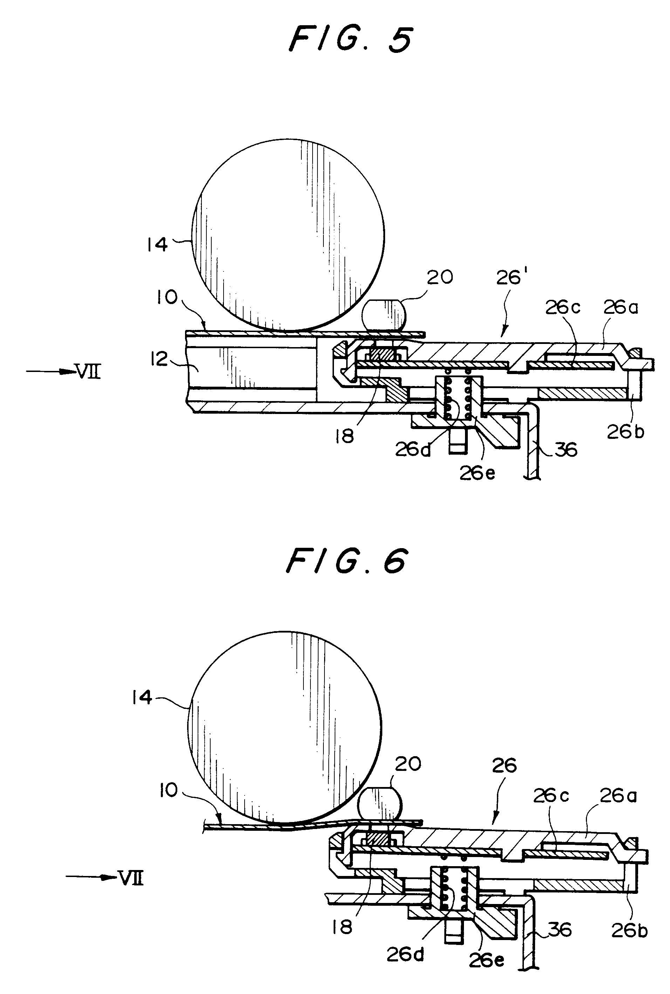

The structure and operation of the sensor carrier unit 26 will now be described in greater detail in connection with FIGS. 5 through 7.

In the interior of the sensor carrier unit 26′ which is moved by the unit driving mechanism 22 in the direction of reading the bar code, as shown in FIG. 5, the light-reflecting sensor 18 is fixed on a print-wired sensor board 26c pivotally mounted on a carrier cover 26a. The carrier cover 26a is vertically pivotally supported on the carrier base 26b and is normally urged upwardly by a sensor spring 26d fixed to the carrier base 26b. A projection 26e extending downwardly from the carrier base 26b is received in a slit formed in a sensor frame 36, the slit extending perpendicularly to the plane of sheet of the drawing. Thus the sensor carrier unit 26 is movable along the slit in the direction of reading the bar code. FIG. 5 is a cross-sectional view of the sensor carrier unit 26′ located in the H. P.

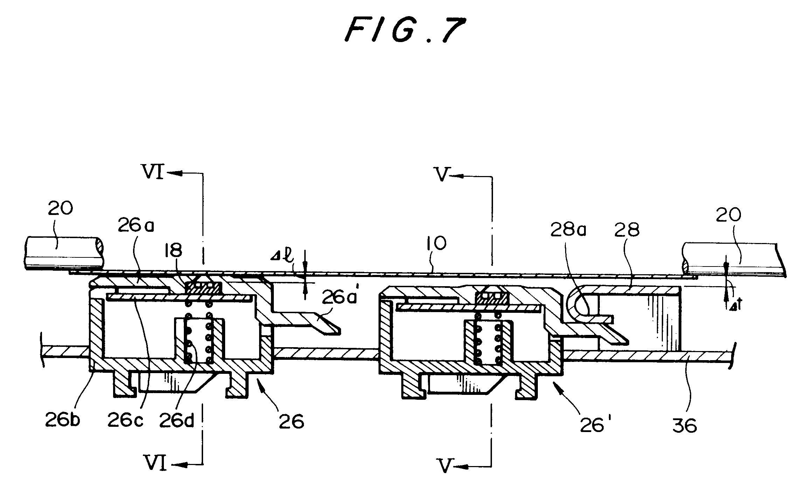

FIG. 6 is a view similar to FIG. 5, showing the sensor carrier unit 26′ having been moved from the H. P. to the bar code reading position. In FIG. 6, unlike FIG. 5, the carrier cover 26a is released from the H. P. where the carrier cover 26a is pressed downwardly by the paper guide 28 (FIG. 7). The carrier cover 26a is then urged upwardly against the bar-coded surface of the printing medium 10 by the carrier spring 26d.

FIG. 7 is a hypothetical combined cross-sectional view as viewed from the direction of respective arrows VII in FIGS. 5 and 6. The sensor carrier unit 26 illustrated at the left side of FIG. 7 assumes the bar code reading position (FIG. 6); with the printing medium 10 supported on its rear surface by the guide member 20, the sensor carrier unit is disposed resiliently against the bar-coded surface so that the light-reflecting sensor 18 can read the bar code as the sensor carrier unit moves in the reading direction. The carrier cover 26a has an angled claw 26a extending horizontally from its right end.

With the sensor carrier unit 26′ located in the H. P. illustrated at the right side in FIG. 7, the claw 26a′ is brought downwardly by the engagement with a bent strip 28a of the paper guide 28 to thereby be held in its lower position against the bias of the carrier spring 26d. As a result, the sensor carrier unit 26′ is moved away from the printing medium 10 to prevent the leading end portion of the printing medium 10 from being caught during setting or loading the printing medium 10. Thus the sensor carrier unit is normally located at the H. P. standby during setting the printing medium 10.

When a fresh printing medium 10 is inserted, the sensor carrier unit 26′ is moved leftwardly so that the claw 26a′ is removed from the paper guide 28. This allows the carrier cover 26a and the sensor 18 to be pressed against the printing medium 10 under the biasing force of the sensor spring 26d built in the sensor carrier unit 26. At that time, the distance between the sensor 18 and the bar-coded surface is maintained to a constant value Δℓ. Consequently, it is possible to read the bar code comfortably and accurately by using the light-reflecting sensor which is composed of a light-emitting diode and a photo-transistor, guaranteeing an inexpensive small-sized printer.

With the line thermal printer of the illustrated embodiment, the line thermal head is pivotally movable between a non-printing position where a printing medium can be inserted with ease, and a printing position where the printing medium is held between the line thermal head and the platen, the printing medium can be prevented from being displaced when received a vibration or impact during reading. Thus it is possible to avoid inaccurate reading of the bar code.

Further, the sensor carrier unit and the guide member are movable, in response to the movement of the line thermal head, between a reading position where they are in contact with the printing medium, and a non-reading position wherein they are retracted from the printing medium. It is thereby possible to correct the distance between the bar-coded surface of the light-reflecting sensor as the distance is out of a required constant range.

According to the line thermal printer of this invention, even if the distance between the bar-coded surface and the sensor is not constant due to puckering of the bar-coded portion, the printing medium is supported on its rear surface opposite to the bar-coded surface by the guide member to correct the distance to a constant value. Therefore easy and precise reading of the bar code can be achieved without increasing the precision of the individual parts of the bar code reader mechanism.

Additionally, since the printing medium is held exactly between the line thermal head and the platen during reading of the bar code, the positional relation between the sensor and the bar code can be maintained even when a certain vibration or impact is exerted on the printing medium and the printer body.

## Claims

1. A line thermal printer capable of reading a bar code (16) attached on a printing medium (10), comprising:
(a) a frame;
(b) a line thermal printer mechanism including a line thermal head (12) and a platen (14) for performing a printing on said printing medium (10) placed between said line thermal head (12) and said platen (14), at least one of said line thermal head (12) and said platen (14) being rotatably suported on said frame;
(b) means for moving at least one of said line thermal head (12) and said platen (14) between a non-printing position and a printing position, at which said printing medium (10) is fixedly held between said line thermal head (12) and said platen (14);
(d) a bar code reader mechanism, which is supported on said frame, including a sensor carrier unit (26) for reading the bar code (16) on said printing medium (10), at least said sensor carrier unit (26) or a guide member (20) for supporting said printing medium (10) on its rear surface being pivotally movable, in response to the movement of said line thermal printer mechanism, between a non-reading position and a reading position close to said printing medium (10); and
(e) a sensor-carrier-unit drive mechanism for moving said sensor carrier unit (26) in a direction of reading the bar code (16) on said printing medium (10).

2. A line thermal printer according to claim 1, in which said line thermal head (12) is fixed to a head holder (30) pivotally mounted on a pivot (32), said line thermal head (12) being movable, in response to a pivotal movement of said head holder (30), between said printing position and said non-printing retracted position.

3. A line thermal printer according to claim 2, in which said head holder (30) is engageable with a rotatably driven release cam (34), said head holder (30) is being drivable, in response to the rotation of said release cam (34), between said printing position and said non-printing position of said line thermal head (12).

4. A line thermal printer according to claim 3, in which said release cam (34) is engageable with a resilient mechanism on a position opposite to said head holder (30) so that said release cam (34) receives pressures in opposite directions from said head holder (30) and said resilient mechanism to restrain a lateral pressure exerting on a cam shaft (42) driving said release cam (34).

5. A line thermal printer according to claim 4, in which said cam shaft (42) has a square cross section, said release cam (34) having a vertically slightly elongated rectangular shaft hole so that said cam shaft (42) is vertically movable in said shaft hole.

6. A line thermal printer according to claim 2, in which said sensor carrier unit (26) is supported by a distal end of said head holder (30), said sensor carrier unit (26) being movable between said reading position and said non-reading retracted position when said line thermal head (12) is moved between said printing position and said non-printing position.

7. A line thermal printer according to claim 6, in which said guide member (20) is supported on a bail lever (38) pivotally mounted on a platen shaft (14a), said bail lever (38) being operatively connected at one end to said head holder (30) so that when said head holder (30) moves said line thermal head (12) to said printing position, said bail lever (38) is moved in the opposite direction to bring said quide member (20) toward said sensor carrier unit (26).

## Patentansprüche

1. Thermischer Zeilendrucker mit der Fähigkeit zum Lesen eines Barcodes (16), welcher auf einem Druckmedium (10) aufgebracht ist, umfassend:
a) einen Rahmen;
b) einen thermischen Zeilendruckermechanismus mit einem thermischen Zeilendruckkopf (12) und einer Walze (14) zum Drucken auf dem Druckmedium (10), welches zwischen dem thermischen Zeilendruckkopf (12) und der Walze (14) angeordnet ist, wobei wenigstens der thermische Zeilendruckkopf (12) oder die Walze (14) drehbar an dem Rahmen angebracht ist;
c) eine Einrichtung zum Bewegen wenigstens des thermischen Zeilendruckkopfes (12) oder der Walze (14) zwischen einer Nicht-Druckposition und einer Druckposition, in welcher das Druckmedium (10) zwischen dem thermischen Zeilendruckkopf (12) und der Walze (14) fest eingespannt ist;
d) einen Barcode-Lesemechanismus, welcher an dem Rahmen angebracht ist und eine Sensorträgereinheit (26) zum Lesen des Barcodes (16) auf dem Druckmedium (10) aufweist, wobei wenigstens die Sensorträgereinheit (26) oder ein Führungselement (20) zum Stützen des Druckmediums (10) auf dessen Rückseite in Antwort auf die Bewegung des thermischen Zeilendruckermechanismus zwischen einer Nicht-Leseposition und einer Leseposition in der Nähe des Druckmediums (10) drehend bewegbar ist; und
e) einen Antriebsmechanismus für die Sensorträgereinheit, um die Sensorträgereinheit (26) in eine Richtung zum Lesen des Barcodes (16) auf dem Druckmedium (10) zu bewegen.

2. Thermischer Zeilendrucker nach Anspruch 1,
dadurch **gekennzeichnet**,
daß der thermische Zeilendruckkopf (12) an einem Druckkopfhalter (30) befestigt ist, welcher drehbar an einem Schaft (32) gelagert ist, wobei der thermische Zeilendruckkopf (12) in Antwort auf eine Drehbewegung des Druckkopfhalters (30) zwischen der Druckposition und der zurückgezogenen Nicht-Druckposition bewegbar ist.

3. Thermischer Zeilendrucker nach Anspruch 2,
dadurch **gekennzeichnet**,
daß der Druckkopfhalter (30) mit einem drehbar angetriebenen Ausrücknocken (34) in Eingriff bringbar ist, wobei der Druckkopfhalter (30) in Antwort auf die Drehbewegung des Ausrücknockens (34) zwischen der Druckposition und der Nicht-Druckposition des thermischen Zeilendruckkopfes (12) antreibbar ist.

4. Thermischer Zeilendrucker nach Anspruch 3,
dadurch **gekennzeichnet**,
daß der Ausrücknocken (34) mit einem Federmechanismus, in einer Stellung gegenüber dem Druckkopfhalter (30) in Eingriff bringbar ist, so daß der Ausrücknocken (34) Druckkräfte in entgegengesetzen Richtungen von dem Druckkopfhalter (30) und dem Federmechanismus aufnimmt, um eine seitliche Druckkraft auf einen Nockenschaft (42) zu unterdrücken, welcher den Ausrücknocken (34) antreibt.

5. Thermischer Zeilendrucker nach Anspruch 4,
dadurch **gekennzeichnet,**
daß der Nockenschaft (42) einen viereckigen Querschnitt aufweist und daß der Ausrücknocken ein rechteckiges, in vertikaler Richtung geringfügig erweitertes Schaftloch aufweist, so daß der Nockenschaft (42) in dem Schaftloch vertikal bewegbar ist.

6. Thermischer Zeilendrucker nach Anspruch 2, dadurch **gekennzeichnet,**
daß die Sensorträgereinheit (26) durch ein distales Ende des Druckkopfhalters (30) getragen ist, wobei die Sensorträgereinheit (26) zwischen der Leseposition und der zurückgezogenen Nicht-Leseposition bewegbar ist, wenn der thermische Zeilendruckkopf (12) zwischen der Druckposition und der Nicht-Druckposition bewegt wird.

7. Thermischer Zeilendrucker nach Anspruch 6, dadurch **gekennzeichnet**,
daß das Führungselement (20) auf einem Andrückhebel (38) angeordnet ist, welcher drehbar auf einem Walzenschaft (14a) gelagert ist, wobei der Andrückhebel (38) funktionsmäßig mit einem Ende mit dem Druckkopfhalter (30) verbunden ist, so daß der Andrückhebel (38) in die entgegengesetzte Richtung bewegt wird, um das Führungselement (20) zu der Sensorträgereinheit (26) zu bringen, wenn der Druckkopfhalter (30) den thermischen Zeilendruckkopf (12) zu der Druckposition bewegt.

## Revendications

1. Imprimante thermique ligne par ligne pouvant lire un code barres (16) fixé sur un milieu d'impression (10), comprenant :
a) un cadre ;
b) un mécanisme d'imprimante thermique ligne par ligne comprenant une tête thermique ligne par ligne (12) et une plaque d'impression (14) de manière à réaliser une impression sur ce milieu d'impression (10) placé entre la tête thermique ligne par ligne (12) et la plaque d'impression (14), au moins l'une desdites tête thermique ligne par ligne (12) et plaque d'impression (14) étant supportée à rotation sur le cadre ;
c) des moyens destinés à déplacer au moins l'une desdites tête thermique ligne par ligne (12) et plaque d'impression (14) entre une position de non impression et une position d'impression, dans laquelle le milieu d'impression (10) est maintenu rigidement entre la tête thermique ligne par ligne (12) et la plaque d'impression (14) ;
d) un mécanisme de lecture de code barres, qui est supporté sur ledit cadre, comprenant un ensemble (26) support de capteur destiné à lire le code barres (16) placé sur le milieu d'impression (10), au moins l'ensemble (26) support de capteur ou un organe de guidage (20) destiné à supporter ledit milieu d'impression (10) sur sa surface arrière étant mobile par pivotement, en réponse au mouvement du mécanisme d'impression thermique ligne par ligne, entre une position de non impression et une position d'impression proche du milieu (10) d'impression ; et
e) un mécanisme d'entraînement de l'ensemble support de capteur destiné à déplacer cet ensemble (26) support de capteur dans un sens de lecture du code barres (16) placé sur le milieu d'impression (10).

2. Imprimante thermique ligne par ligne selon la revendication 1, dans laquelle la tête thermique ligne par ligne (12) est fixée à un organe (30) de maintien de la tête placé à pivotement sur un pivot (32), la tête thermique ligne par ligne (12) étant mobile, en fonction du mouvement de pivotement de l'organe (30) de maintien de la tête, entre ladite position d'impression et ladite position en retrait de non impression.

3. Imprimante thermique ligne par ligne selon la revendication 2, dans laquelle l'organe (30) de maintien de la tête peut être mis en prise avec une came (34) de libération entraînée en rotation, l'organe (30) de maintien de la tête pouvant être entraîné, en fonction de la rotation de la came (34) de libération entre la position d'impression et la position de non-impression de la tête thermique ligne par ligne (12).

4. Imprimante thermique ligne par ligne selon la revendication 3, dans laquelle la came (34) de libération peut être mise en prise avec un mécanisme résilient dans une position opposée à l'organe (30) de maintien de la tête de manière à ce que la came (34) de libération subisse des pressions dans des directions opposées de l'organe (30) de maintien de la tête et du mécanisme résilient de manière à limiter une pression latérale s'exerçant sur un arbre (42) à came entraînant la came (34) de libération.

5. Imprimante thermique ligne par ligne selon la revendication 4, dans laquelle l'arbre (42) à came possède une section transversale carrée, la came (34) de libération possédant un alésage rectangulaire légèrement allongé verticalement de manière à ce que l'arbre (42) à came soit mobile verticalement dans l'alésage.

6. Imprimante thermique ligne par ligne selon la revendication 2, dans laquelle l'ensemble (26) support de capteur est placé à une extrémité distale de l'organe (30) de maintien de la tête, l'ensemble (26) support de capteur étant déplaçable entre la position de lecture et la position en retrait de non lecture lorsque la tête thermique ligne par ligne (12) est déplacée entre la position d'impression et la position de non impression.

7. Imprimante thermique ligne par ligne selon la revendication 6, dans laquelle l'organe (20) de guidage est placé sur un levier (38) à balancier qui est placé à pivotement sur un arbre (14a) de la plaque d'impression, le levier (38) à balancier étant fonctionnellement relié à une extrémité de l'organe (30) de maintien de la tête de manière à ce que lorsque l'organe (30) de maintien de la tête déplace la tête thermique ligne par ligne (12) en position d'impression, le levier (38) à balancier est déplacé en sens opposé de manière à amener l'organe de guidage (20) vers l'ensemble (26) support de capteur.
